(19) Europäisches Patentamt
European Patent Office
Office européen des brevets

(11) **EP 2 469 041 A1**

(12) **EUROPEAN PATENT APPLICATION**

(43) Date of publication:
**27.06.2012 Bulletin 2012/26**

(21) Application number: **10196518.4**

(22) Date of filing: **22.12.2010**

(51) Int Cl.:
*F01D 21/00* (2006.01)  *F01D 21/14* (2006.01)
*F02C 9/00* (2006.01)  *F02C 9/28* (2006.01)
*F01D 17/08* (2006.01)  *F01D 21/12* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Siemens Aktiengesellschaft**
**80333 München (DE)**

(72) Inventor: **Bonaldo, Alessio**
**61245 Finspång (SE)**

(54) **Method of detecting a predetermined condition in a gas turbine and failure detection system for a gas turbine**

(57) The present invention relates to a method of detecting a predetermined condition in a gas turbine (10) and to a failure detection system for a gas turbine (10).

The invention analyses instantaneous temperature readings from different locations (42, 32) in or outside/downstream a combustion system (22) of the gas turbine (10) by calculating the variance (130) for each measurement location (42, 32) during a predetermined time period. The variance of one measurement location is selected and than compared with a threshold that is based on at least two of the other variances of the other measurement locations (140, 150). If the said one selected variance goes above the threshold the occurrence of the predetermined condition is detected (170, 180).

FIG 3

Temperatures deviation Detection Routine

Start Routine

100

T1 ... TN
Instantaneous temperature readings from N different locations
110

Ti[x] = Ti with i = 1 to N
Update the array of the most recent x temperature readings for each Ti
120

StdT[i] = StDev(Ti[x]) with i = 1 to N
Calculation of the standard deviation for each Ti using the last x readings
130

At this point the routine path will be separated for each Pilot Tip Thermocouple
In this case, only T1 will be considered

Control Function
FTT1[t] = FTT1[t-1]

140, 150

IF
FT1[t] = StdT1[t] - M x AVERAGE(StdT2[t]; ... ; StdTN[t]) - Bp > 0
Standard deviation of T1 compared against a function of the other standard deviations related to N-1 measurements Ti

NO

YES

Control Function = FTT1[t] = FTT1[t-1] + FT1[t]
160

NO

IF
FTT1[t] > FFTL
170

YES

180

GAS TURBINE CONTROL SYSTEM ACTION
• Warning message on screen to contact service centre
• Control system further actions: shut down, trip to idle, etc.
• Change over to gas fuel

EP 2 469 041 A1

**Description**

Background of the invention

This invention relates to a method of detecting a predetermined condition in a gas turbine. The invention further relates to a failure detection system for a gas turbine.

In such a gas turbine known in the state of the art, for example as it is disclosed in EP 1 953 454 A1, a gas duct or gas flow path is routed through a combustion section/system located between a compressor and a turbine section. The combustion section may include an annular array of combustors. High pressure air from the compressor flows through the combustion section where it is mixed with fuel and burned. As mentioned above, the combustors each comprise a burner for igniting the air/fuel mixture especially during start up of the gas turbine.

Combustion gases exit the combustion section to power the turbine section which drives the compressor. In single-shaft arrangements a high-pressure and a low-pressure turbine of the turbine section are mechanically connected and together drive an output power shaft. In twin-shaft arrangements a low-pressure turbine (power turbine) is mechanically independent, i.e. only drives the output power shaft, and a high-pressure turbine, or so called compressor turbine, drives the compressor. This combination acts as a gas generator for the low-pressure turbine. The combustion gases exit the turbine section through an exhaust duct.

An unwanted introduction of liquid fuel in the combustor while operating on gas fuel can cause an increase of temperature in the combustion section. The increase of temperature can damage turbine components, i.e. nozzles. Hardware failures in components as a burner braze failure can be a cause for such unwanted conditions.

A solution for hardware failures is to prevent failures by designing hardware solutions that reduce a possibility for it to happen. But hardware failures can not be totally avoided, therefore a reliable detection system for hardware failures should be available.

Various systems to detect gas turbine faults are known in the state of the art. Known systems are based on fixed temperature thresholds or temperature measurements spread increase above certain limits. EP 1 953 454 A1 discloses a method for detecting a partial flame failure in a gas turbine by measuring a temperature over time at two different locations using a rate of change in temperature to determine the flame failure.

Summary of the invention

It is a first objective of the present invention to provide a method for detecting a predetermined condition in a gas turbine, particularly to detect an abnormal condition and/or a hardware failure, for example a burner braze failure, whereby the above-mentioned shortcomings can be mitigated, and especially a more reliable detection of a predetermined condition, particularly an abnormal and/or a failure condition, in a gas turbine is facilitated. It is a second objective of the invention to provide an advantageous failure detection system for a gas turbine.

The first objective is achieved, according to the present invention, by providing a method of detecting a predetermined condition in a gas turbine. Said method comprises the steps of:

- measuring a temperature over time at each of at least three probing points located in said gas turbine,
- determining a variance for each of said measured temperature over time of said at least three probing points,
- selecting one of said determined variances and comparing said one selected variance with a first threshold which is based on at least two of the other determined variances,
- detecting said predetermined condition in said gas turbine based on said comparing of said one selected variance with said first threshold.

The second objective is achieved, according to the present invention, by providing a failure detection system for a gas turbine, in particular configured for conducting the method of detecting a predetermined condition in a gas turbine. Said failure detection system having evaluation means for detecting a predetermined condition, particularly an abnormal condition of said gas turbine and/or a hardware failure in said gas turbine, for example for detecting a burner braze failure in said gas turbine, from at least three temperature over time of temperature measurements at probing points in said gas turbine.

In other words, the invention analyses instantaneous temperature readings from different locations in the gas turbine, i.e. in or outside/downstream a combustion system of the turbine, by calculating the variance, particularly a standard deviation, for each measurement location during a predetermined time period. The variance (or standard deviation) of one - preferable of each - measurement location is than compared - respectively - with a threshold that is based on at least two - preferable each of - the other variances (or standard deviations) of the other measurement locations. If the said one variance (or standard deviation) goes above the threshold the occurrence of the predetermined condition is detected.

The invention is based on the insight, that analysing measurement over time on basis of variances/standard deviations - in addition with a comparing with a dynamic threshold - can lead to more significant, robust results and reliable conclusions as an analysis of measurement over time on basis of single values of the measurement over time (exceeding fixed limits). Particularly for complex dynamic processes with dynamic altering process parameter, such as a process temperature, the analysis and observation of "higher level" statistic characteristics could be much more significant.

A change in a process parameter caused by a "normal" process operation can lead to exceed a fixed, default limit and to a spurious emergency action by using such first level statistics. Higher level statistics in addition with dynamic thresholds allows preventing spurious detection of predetermined/abnormal conditions, i.e. failures, leading to a more stable operation of the turbine. The more stable operation leads to an increased life expectancy of the gas turbine and improves its performance in general. Albeit the invention - using higher level statistics, i.e. using the analysis of variances, - can be used in combination with such a first level analysis.

The invention is further based on the insight, that furthermore unusual temperature variations are characteristic for hardware failures such as leakages or burners braze failures. Leakages or burners braze failures could cause an abnormal condition, i.e. an unwanted introduction of liquid fuel in the combustor. Especially while operating on gas fuel - the introduction of liquid fuel is followed by an increase in temperature at a certain location in the gas turbine. Therefore, measuring temperature and/or providing temperature over time at different locations in and/or outside the combustion system, analysing the measurements by calculating the variances and comparing the variances - as dynamic thresholds - provide an indication of an abnormal condition and an indication for a hardware failure in the turbine.

According to the inventive solution gas turbines conditions can be controlled and/or observed much more reliable - and hardware failures of the turbine such as leakages and/or burner braze failures are detected with higher reliability and earlier in time. This allows preventing further damages of turbine components. This can lead to an increased life expectancy of the gas turbine and improves its performance in general.

Further the detection method/system according to the invention can be retrofitted in existing gas turbine installations - for example by implementing (software/computer) routines in gas turbine control systems - or it can be used as a fault detection (software/computer) tool by support or test engineers - testing gas turbines and/or detecting turbine operational problems. This includes the use of such a fault detection tool in a mobile way - using it for turbines being located at different locations while connecting such a tool with different turbines.

It is also included in the invention to use the detection method/system on real time basis in gas turbine while controlling and/or observing turbine operations. The detection method/system can also be used for simulations, forecasts and/or past performance analysis, particularly analysing historical or simulated measurements.

It is also subject to the invention that the gas turbine could be stationary as well as mobile, for example for aircraft.

In an advantageously embodiment the method comprises further the steps of

- calculating a difference value based on said comparing of said one selected variance with said first threshold,
- determining a control function value of a control function based on said difference value, particularly if said one selected variance exceed said first threshold,
- comparing said control function value with a second threshold, particularly with a second default threshold,
- detecting the predetermined condition in said gas turbine if said control function value exceed said second threshold.

It is further advantageous if the method steps are repeated at various successive points of time wherein said control function value is accumulated in said control function.

In other words, if the selected variance goes above the first threshold, the difference is then accumulated in the control function that is then compared with the second, fixed threshold. When the control function value goes above the second threshold a warning for a fault could be released and further actions might be implemented to preserve integrity of the combustion hardware.

In another advantageous embodiment said temperature over time will be measured at several or various probing points located in said gas turbine, particularly located within said combustion system of said gas turbine and/or located downstream from said combustion system of said gas turbine. It is also advantageous if said first threshold is based on all other variances. Said first threshold could be calculated as an average value using at least two of the other variances. It can be preferable to calculate the average value using several or all of the other variances.

It is further advantageous if said first threshold is calculated by using at least one default parameter, particularly if said default parameter is selected according to a gas turbine model, a temperature measurement tool, a temperature measurement location, a temperature measurement time frequency and/or a range of the temperature over time.

If is also advantageous if said control function value is reset at regular time intervals in order to avoid spurious warnings dictated by small deviations accumulated during a long time period.

Such a warning and/or safety action can be a warning message and/or a change of fuel and/or a shut down and/or a trip to idle of said gas turbine wherein the warning and/or safety action can be generated, particularly by a control system of said gas turbine, if said predetermined condition, i.e. the abnormal condition, is detected.

Said predetermined condition to be detected can be an abnormal condition, particularly an unusual temperature variation or behaviour, particularly caused by an unwanted liquid fuel introduction within a combustor of said combustion system. Unwanted liquid fuel introduction could be caused by a hardware failure, particularly a leakage and/or a burner braze failure.

Advantageously, the temperature sensors for conducting the temperature measurements comprise thermocouples. Thermocouples used in the turbine should have a low thermal capacity and therefore a high response rate, so they are a good representation of the thermal field in the turbine at any operating condition.

Brief description of the drawings

A detailed description of the present invention is provided below with reference to the following diagrammatic drawings, in which:

Figure 1    is a sectional view of a embodiment of a gas turbine according to the invention;

Figure 2    is a cross-sectional view of a combustion system with a pilot burner contained in the gas turbine according to Figure 1;

Figure 3    is a flow chart of failure detection routine working principles according to the invention;

Figure 4    is a flow chart of a (software) program structure of the failure detection routine working principles of Figure 3 according to the invention.

Detailed Description of the Illustrated Embodiment

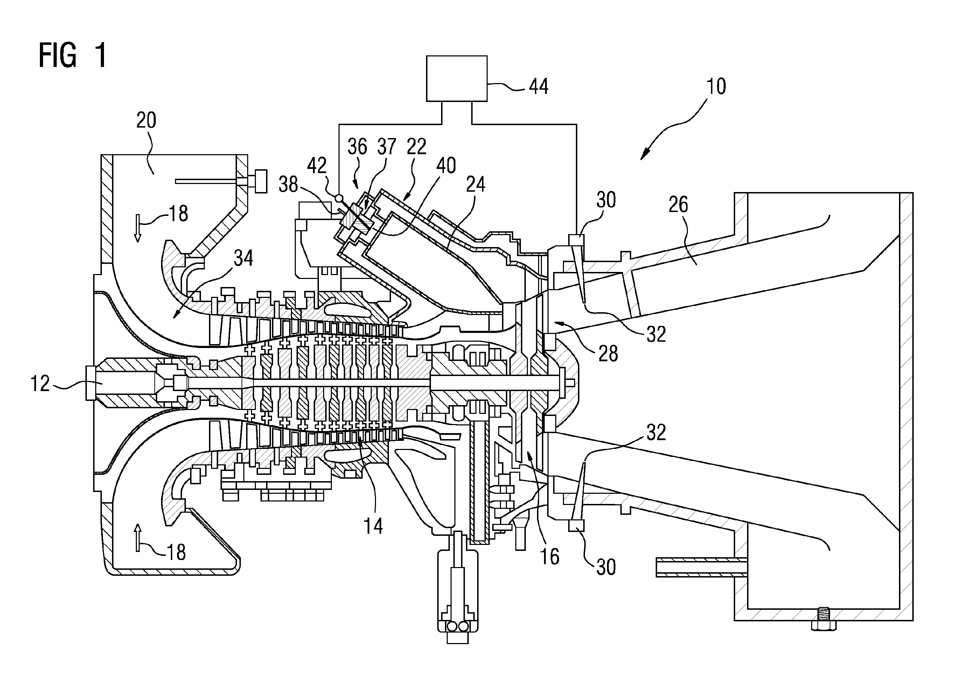

Figure 1 is an embodiment of a gas turbine 10 in the form of a single-shaft gas turbine. The gas turbine 10 comprises a single rotor shaft 12 carrying both a compressor 14 and a turbine 16. A gas duct 34 guides a propulsion gas 18 through the gas turbine 10 starting from an inflow section 20 via the compressor 14, a combustion section/system 22, the turbine 16 and an exhaust duct 26.

At the left end of the gas turbine 10 according to Figure 1 the propulsion gas 18 in the form of air flows via an inflow section 20 into the compressor 14. The compressor 14 thereupon compresses the propulsion gas 18. The propulsion gas 18 then enters the combustion system/section 22 of the gas turbine 10, in which it is mixed with fuel and ignited in combustors 24. The combustion section 22 contains an annular array of (six) combustors 24, of which only one of six is shown in Figure 1 and which lead into the gas duct 34. The combusted propulsion gas 18 flows through the turbine 16 expanding thereby and driving the rotor shaft 12. The expanded propulsion gas 18 then enters an exhaust duct 26.

The (six) combustors 24 each comprise a burner 36 for introducing fuel into the inside of the corresponding combustor 24 and igniting the fuel/air mixture. A burner 36 comprises a pilot burner 37. The pilot burner 37 contains a fuel inlet 38 for introducing the fuel into the pilot burner 37. The fuel is subsequently guided to a burner face 40 or burner tip of the pilot burner 37. Furthermore, each pilot burner 37 contains a temperature sensor 42 in the form of a so-called pilot tip thermocouple arranged for measuring the temperature at the burner face 40.

At an exit 28 of the turbine 16 into the exhaust duct 26 several temperature sensors 30 in the form of so called turbine exit thermocouples are positioned at different probing points 32. By placing the temperature sensors 30 at the power turbine exit 28 the probing points 32 are located downstream from the combustors 24.

The temperatures measured over time by the (six) thermocouples 42 are evaluated by evaluation means 44 while controlling and observing conditions of the gas turbine 10 by that means 44. As a result of this evaluation hardware failures could be detected, i.e. a burner braze failure in a subset of the combustors 24 could be assessed.

The evaluation routine (implemented in the evaluation means 44), i.e. the detection routine 100, will be described later in the text. However, it should be noted, that the thermocouples 42 does not necessarily needed to be located in the pilot burner 37. Other locations in the gas turbine 10, for example downstream from the combustors 24, allowing for measuring the temperature in the turbine are also possible.

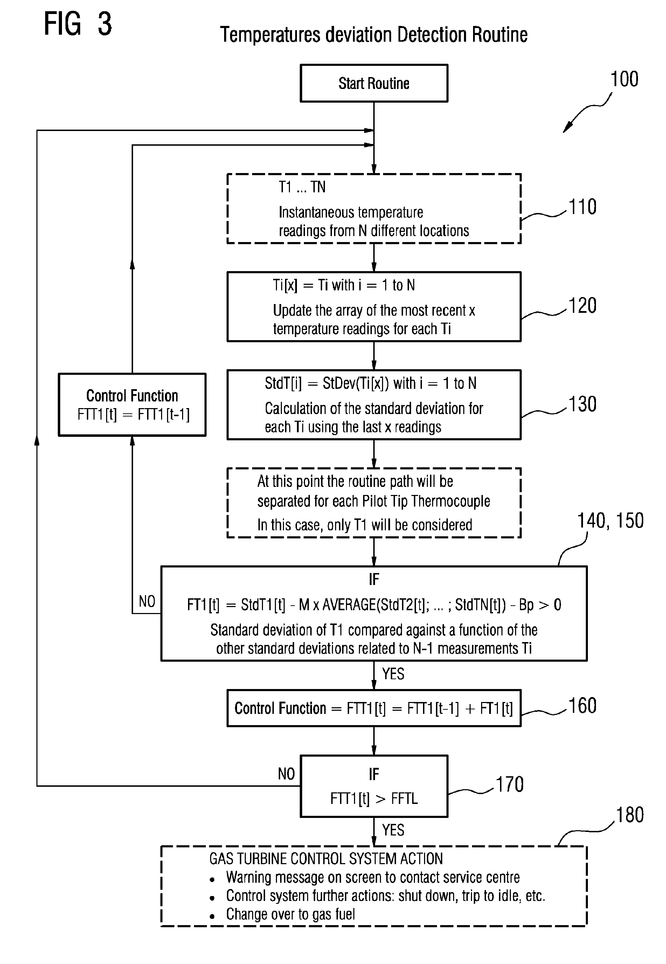

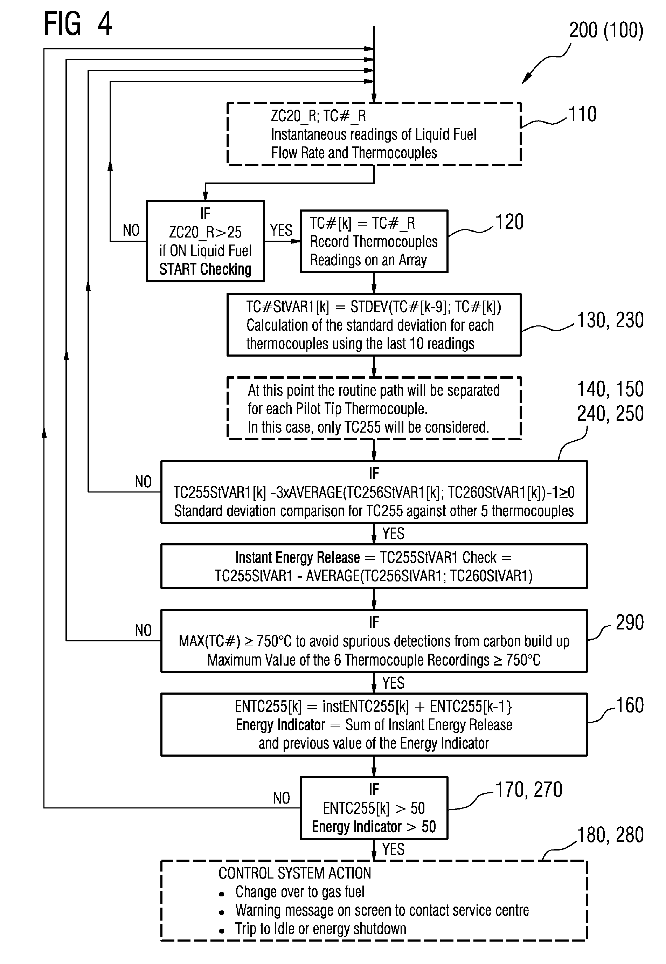

The evaluation means 44 according to Figure 1 are adapted to conduct the detection routine 100 - shown in Figures 3 and 4 - described in the following. The detection routine 100 is implemented - as software or programmed computer components - on the turbine control system in order to detect a burner braze failure and take prompt actions to avoid the damage of nozzles. However, it should be noted, that the detection routine 100 could be implemented on a turbine test beds as a support for test engineers while performing a turbine test.

The detection routine 100, 200 (Figures 3 and 4) monitors the pilot tip temperature instantaneous measurements and analyzes their variations over a certain interval of time, for example 10 seconds target to be tested. The unusual temperature variations that are characteristic of leakage or burner braze failures are captured and this allows the system to respond promptly with the required actions and warning messages.

Detection routine 100 working principle (Figure 3):

The routine 100 applies on combustor hardware temperature recordings that are intended to follow similar trends. In the following description the temperature instantaneous readings from $N$ different measurement locations are identified as

(110) :

$$T_1(t) \quad ... \quad T_N(t)$$

Where t indicates the time of recording (120). For each $T_i(t)$ the standard deviation is calculated using the last x readings recorded during the time interval $\Delta t_A$ (130)

$$StdT_i(T_i, \Delta t_A) \quad \texttt{for} \quad i = 1...N$$

Each standard deviation value for the single $T_i$ is then compared to a function of the average value using the standard deviations calculated for the other temperature measurements locations (140) :

$AvgExT_i, (StdT_K)$ with $k$=1 to N excluding $k$=$i$ in the averaging calculation.

The control function is calculated for each time instant using the last x readings available according to the following equation (150):

$$FT_i(t) = StdT_i - M * AvgExT_i - Bp$$

$M$ and Bp are two parameters which are selected according to the temperature measurements time frequency and $T_i$ range of values. The suggested values as default are: $M$ = 3; $Bp$ = 1.

If $FT_i$>0, its value is added on $FTT_i$ (160).

When $FTT_i$ reaches a value that is above a threshold limit $FTT_L$ (170) , the control system recognizes the existence of a fault and warning signal (message) can be issued and further actions could be prompted (180).

The function value $FTT_i$ can be brought to zero at regular time intervals ($\Delta t_C$) in order to avoid spurious warning messages dictated by small deviations accumulated during a long time period. A default value suggested for $\Delta t_C$ is 2 hours.

The following parameters can be tuned and selected according to the gas turbine model considered, the temperature measurement tool and the measurement location:

$\Delta t_A$ ; $M$ ; $Bp$ ; $ABF_L$; $\Delta t_C$ . These parameters guarantee flexibility for the application of the detection routine to various types of combustor hardware.

Burner braze failure mode

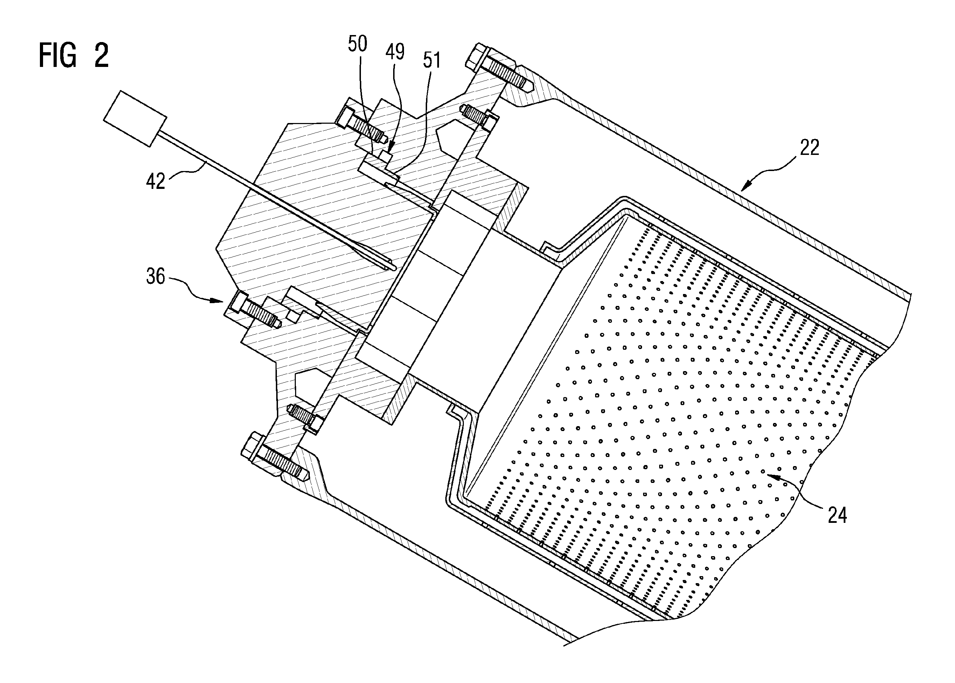

A burner braze failure is associated to a component identified by the name "Liquid Core" 49 as it is shown in Figure 2 as part of the combustion system 22.

Brazed joints 50, 51 are also shown in Figure 2 and their failures would determine a leakage of liquid fuel into the area between the liquid core 49 and the pilot burner 37. The liquid fuel would therefore reach the combustion chamber not only from the standard path through the nozzles, but also through the gap between pilot burner 37 and swirler. This second path would not generate a spray but it would determine extra fuel to be injected in proximity of the pilot burner surface.

The consequent combustion of this fuel would determine a drastic increase of the pilot tip temperature. This type of failure is more likely to happen when a fuel change over from gas to liquid take place. The liquid fuel, cold in comparison to the liquid core metal body, is suddenly injected in the channel between the braze joints inducing thermal stresses. From the analysis of the pilot tip thermocouples readings according to the detection routine 100 several characteristics can be observed: the pilot tip temperatures maintain a constant average value during time intervals away from fuel change over or power output request change; during these intervals the temperature variations of subsequent readings appear to be uniform between the six pilot tip thermocouples; the pilot tip temperatures are not the same for all six thermocouples and the differences rearrange after a fuel change over or a power output change; the only feature that is introduced by the burner braze failure is the unusual variation of only one thermocouple reading during a period that could last few minutes.

Detection routine 100, 200 for the burner braze failure mode (Figure 4):

Based on these characteristics the detection mode of a burner braze failure can be based upon the observation of pilot tip temperature variations as shown in Figure 4 (according to the principles as shown in Figure 3).

All six thermocouples time line readings from the six pilot burners of the turbine are associated with variations when there is a change in power output, a gas to liquid changeover or liquid to gas changeover. But the variation in pilot tip temperature associated to burner braze failure is characteristic of only one burner out of six. Instead of using the simple difference between two subsequent recordings, it is more robust to use the variance, i.e. standard deviation, of at least several pilot tip temperature recordings.

For each pilot tip temperature the standard deviation is calculated and it can be compared with the standard deviations average obtained from the readings of the other 5 thermocouples 230, 240, 250.

The difference between these two values can be used as an indication of the extra fuel release over the pilot burner surface. The use of 10 readings will guarantee a robust detection system that will not incur in spurious warnings.

The threshold level used to detect the burner braze failure against a thermocouple is calculated using the average of the other five thermocouples standard deviations multiplied by three and increased by one 240, 250. Adding one and applying a factor equivalent to three on the average allows avoiding spurious warnings associated to small differences that are typical during normal operation.

The pilot tip temperatures are sensibly different from burner to burner but they are steady at constant power operation and no fuel changeover. When the power or the fuel is changed, they usually rearrange on different value levels that are not linearly correlated to the values before the change. This does not interfere with the standard deviation calculation because it will be captured by the variations of all six readings.

As it could be seen in Figure 4 the routine further provides discrimination between a failure condition and a carbon build up 290. Both cases can only be based upon the temperature level. The carbon build up happens at low load and therefore at low pilot tip temperatures, the temperature value 750°C can be used as a cut off level for the burner braze failure routine to avoid spurious warnings 290.

When the Energy Indicator level (threshold level) will reach the value 50 an action is prompt from the control system that could lead to the following thread (270, 280):

- trigger a change to gas fuel, if gas fuel is available
- warning message on the screen to contact service centre (if internet is available on site a warning email could be automatically be sent to service provider)
- trip the turbine to Idle if gas fuel is not available or shutdown the turbine.

The Energy Indicator based on 1 minute rate readings will record the sum of the heat release indicator during the last 60 recordings in order to cancel the memory of Energy Indicator values that might have already produced a warning 160. The Energy Indicator values will have to be set to zero every time there is a fuel change over too.

It has to be underlined that some features and checks could be added to the routine in order to improve its robustness. For instance protections against malfunctioning thermocouples or wrong thermocouples recordings are required. If one thermocouple is not working it could be simply taken out of the routine checks and average values calculations.

## Claims

1. Method of detecting a predetermined condition in a gas turbine (10), said method comprising the steps of:

- measuring a temperature over time at each of at least three probing points located in said gas turbine (110, 120),
- determining a variance for each of said measured temperature over time of said at least three probing points (130, 230),
- selecting one of said determined variances and comparing said one selected variance with a first threshold which is based on at least two of the other determined variances (140, 150, 160, 170, 240, 250, 270),
- detecting said predetermined condition in said gas turbine based on said comparing of said one selected variance with said first threshold (180, 280).

2. Method according to claim 1, wherein said method further comprising the steps of

- calculating a difference value based on said comparing of said one selected variance with said first threshold (140, 150, 240, 250),
- determining a control function value of a control function based on said difference value, particularly if said one selected variance exceed said first threshold (160),
- comparing said control function value with a second threshold, particularly with a second default threshold (170, 280),
- detecting the predetermined condition in said gas turbine if said control function value exceed said second threshold (180, 280).

3. Method according to claim 2, wherein the method steps are repeated at various successive points of time wherein said control function value is accumulated in said control function (160).

4. Method according to any one of the preceding claims, wherein said variance is determined by calculating a standard deviation (130, 230).

5. Method according to any one of the preceding claims, wherein

- measuring said temperature over time at several or various probing points (42, 32) located in said gas turbine (10), particularly located within a combustion system (22) of said gas turbine (10) and/or located downstream from said combustion system (22) of said gas turbine (10) (110, 120), and/or
- comparing said one selected variance with said first threshold which is based on all other determined variances (140, 150, 160, 170, 240, 250, 270).

6. Method according to any one of the preceding claims, wherein

- calculating said first threshold based on an average value using at least said at least two of the other determined variances (140, 150, 240, 250).

7. Method according to any one of the preceding claims, wherein

- calculating said first threshold using at least one default parameter, particularly said default parameter is selected according to a gas turbine model, a temperature measurement tool, a temperature measurement location, a temperature measurement time frequency and/or a range of the temperature over time (140, 150, 240, 250).

8. Method according to any one of the preceding claims, wherein said predetermined condition is an abnormal condition, particularly an unusual temperature condition or unusual temperature variation, particularly caused by an unwanted liquid fuel introduction within a combustor (24) of a combustion system (22) of said gas turbine (10).

9. Method according to any one of the preceding claims, wherein a warning and/or safety action is generated, particularly by a control system of said gas turbine (10), if said predetermined condition, particularly an abnormal condition, is detected, and/or wherein said warning and/or safety action is/are a warning message and/or a change of fuel and/or a shut down and/or a trip to idle of said gas turbine (180, 280).

10. Method according to any one of the preceding claims, wherein said method is used for detecting an abnormal condition and/or a hardware failure, particularly a leakage and/or a burner braze failure, in said gas turbine (10) wherein said detected predetermined condition is said abnormal condition caused by said hardware failure.

11. Method according to any one of the preceding claims, wherein said method is used on real time in said gas turbine (10) or said measured temperature over time are historical or simulated measurements.

12. Method according to any one of the preceding claims, used in a gas turbine (10), particularly in a gas turbine control system, for controlling and/or observing conditions of said gas turbine (10), particularly for detecting an abnormal condition of said gas turbine (10) and/or a hardware failure in said gas turbine (10), and/or used as a fault detection tool, particularly for use of a support or test engineer testing gas turbines (10) and/or detecting turbine (10) operational problems.

13. Failure detection system for a gas turbine, in particular configured for conducting a method according to any one of the preceding method claims, said failure detection system having evaluation means (44) for detecting a predetermined condition, particularly an abnormal condition of said gas turbine (10) and/or a hardware failure in said gas turbine (10), particularly for detecting a burner fuel leakage in said gas turbine (10), from at least three temperature over time of temperature measurements at probing points (42, 32) in said gas turbine (10).

14. A failure detection system according to claim 13, implemented in said gas turbine (10), particularly in a gas turbine control system, for controlling and/or observing conditions of said gas turbine (10), particularly for detecting an abnormal condition of said gas turbine (10) and/or a hardware failure in said gas turbine (10), wherein said gas turbine (10) contains at least three temperature sensors (42, 30) located at probing points (42, 32) in said gas turbine (10), particularly located within a combustion system (22) of said gas turbine (10) and/or located downstream from said combustion system (22) of said gas turbine (10) and/or each temperature sensor (42, 32) being adapted for measuring a temperature over time and for providing records for said evaluation means (44).

15. A failure detection system according to claim 13 or claim 14, implemented in a fault detection tool, particularly for use of a support or test engineer testing gas turbines (10) and/or detecting turbine (10) operational problems, wherein said gas turbine (10) contains at least three temperature sensors (42, 30) located at probing points (42, 32) in said gas turbine (10), each temperature sensor (42, 30) being adapted for measuring a temperature over time and for providing records for said evaluation means (44).

FIG 1

EP 2 469 041 A1

FIG 2

EP 2 469 041 A1

EP 2 469 041 A1

# FIG 3
### Temperatures deviation Detection Routine

**Start Routine** — 100

T1 ... TN

Instantaneous temperature readings from N different locations — 110

Ti[x] = Ti with i = 1 to N

Update the array of the most recent x temperature readings for each Ti — 120

Control Function
FTT1[t] = FTT1[t-1]

StdT[i] = StDev(Ti[x]) with i = 1 to N

Calculation of the standard deviation for each Ti using the last x readings — 130

At this point the routine path will be separated for each Pilot Tip Thermocouple
In this case, only T1 will be considered — 140, 150

IF

FT1[t] = StdT1[t] - M x AVERAGE(StdT2[t]; ... ; StdTN[t]) - Bp > 0

Standard deviation of T1 compared against a function of the other standard deviations related to N-1 measurements Ti

NO

YES

Control Function = FTT1[t] = FTT1[t-1] + FT1[t] — 160

NO    IF
FTT1[t] > FFTL — 170

YES

GAS TURBINE CONTROL SYSTEM ACTION
• Warning message on screen to contact service centre
• Control system further actions: shut down, trip to idle, etc.
• Change over to gas fuel — 180

# FIG 4

200 (100)

**110**

```
ZC20_R; TC#_R
Instantaneous readings of Liquid Fuel
Flow Rate and Thermocouples
```

**IF**
ZC20_R>25
if ON Liquid Fuel
START Checking    — NO / YES

**120**
TC#[k] = TC#_R
Record Thermocouples
Readings on an Array

**130, 230**
TC#StVAR1[k] = STDEV(TC#[k-9]; TC#[k])
Calculation of the standard deviation for each
thermocouples using the last 10 readings

**140, 150 / 240, 250**
At this point the routine path will be separated
for each Pilot Tip Thermocouple.
In this case, only TC255 will be considered.

**IF**
TC255StVAR1[k] −3xAVERAGE(TC256StVAR1[k]; TC260StVAR1[k])−1≥0
Standard deviation comparison for TC255 against other 5 thermocouples    — NO / YES

Instant Energy Release = TC255StVAR1 Check =
TC255StVAR1 − AVERAGE(TC256StVAR1; TC260StVAR1)

**290**
**IF**
MAX(TC#) ≥ 750°C to avoid spurious detections from carbon build up
Maximum Value of the 6 Thermocouple Recordings ≥ 750°C    — NO / YES

**160**
ENTC255[k] = instENTC255[k] + ENTC255[k-1}
Energy Indicator = Sum of Instant Energy Release
and previous value of the Energy Indicator

**170, 270**
**IF**
ENTC255[k] > 50
Energy Indicator > 50    — NO / YES

**180, 280**
```
CONTROL SYSTEM ACTION
  • Change over to gas fuel
  • Warning message on screen to contact service centre
  • Trip to Idle or energy shutdown
```

Europäisches
Patentamt
European
Patent Office
Office européen
des brevets

**EUROPEAN SEARCH REPORT**

Application Number

EP 10 19 6518

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 56 133636 A (HITACHI LTD) 19 October 1981 (1981-10-19) * abstract * | 1-15 | INV. F01D21/00 F01D21/14 F02C9/00 |
| X | EP 2 249 004 A2 (GEN ELECTRIC [US]) 10 November 2010 (2010-11-10) | 1 | F02C9/28 F01D17/08 |
| A | * abstract; figures 1-3 * | 4,5 | F01D21/12 |
| A | EP 1 251 258 A2 (MITSUBISHI HEAVY IND LTD [JP]) 23 October 2002 (2002-10-23) * paragraphs [0025], [0027], [0029]; figures 1,3,4 * | 6,8,10, 12-14 | |
| A | JP 2007 192138 A (MITSUBISHI HEAVY IND LTD) 2 August 2007 (2007-08-02) * abstract * | 4,5 | |
| A | EP 1 420 153 A2 (GEN ELECTRIC [US]) 19 May 2004 (2004-05-19) * claim 25; figures 12,13 * | 11 | |

TECHNICAL FIELDS
SEARCHED (IPC)

F01D
F02C

The present search report has been drawn up for all claims

| Place of search | Date of completion of the search | Examiner |
|---|---|---|
| Munich | 4 August 2011 | Chatziapostolou, A |

EPO FORM 1503 03.82 (P04C01)

## ANNEX TO THE EUROPEAN SEARCH REPORT
## ON EUROPEAN PATENT APPLICATION NO.

EP 10 19 6518

This annex lists the patent family members relating to the patent documents cited in the above-mentioned European search report.
The members are as contained in the European Patent Office EDP file on
The European Patent Office is in no way liable for these particulars which are merely given for the purpose of information.

04-08-2011

| Patent document cited in search report | | Publication date | Patent family member(s) | | Publication date |
|---|---|---|---|---|---|
| JP 56133636 | A | 19-10-1981 | NONE | | |
| EP 2249004 | A2 | 10-11-2010 | US | 2010275575 A1 | 04-11-2010 |
| EP 1251258 | A2 | 23-10-2002 | CA | 2376582 A1 | 17-10-2002 |
| | | | JP | 2002309963 A | 23-10-2002 |
| | | | US | 2002149485 A1 | 17-10-2002 |
| | | | US | 2004182067 A1 | 23-09-2004 |
| JP 2007192138 | A | 02-08-2007 | NONE | | |
| EP 1420153 | A2 | 19-05-2004 | CA | 2439462 A1 | 13-05-2004 |
| | | | JP | 4540955 B2 | 08-09-2010 |
| | | | JP | 2004162698 A | 10-06-2004 |
| | | | US | 2004123600 A1 | 01-07-2004 |

EPO FORM P0459

For more details about this annex : see Official Journal of the European Patent Office, No. 12/82

**EP 2 469 041 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• EP 1953454 A1